# EUROPEAN PATENT SPECIFICATION

(11) **EP 4 174 545 B1**
(45) Date of publication and mention of the grant of the patent: **17.12.2025**
(21) Application number: 22203888.7
(22) Date of filing: 26.10.2022
(51) Int. Cl.: G02B 6/44

(54) **ATTACHMENT BODIES AND OPTICAL CABLE ASSEMBLIES FOR MATING WITH COMPACT MULTIPORTS**
BEFESTIGUNGSKÖRPER UND OPTISCHE KABELANORDNUNGEN ZUR VERBINDUNG MIT KOMPAKTEN MULTIPORTS
CORPS DE FIXATION ET ENSEMBLES DE CÂBLES OPTIQUES POUR S'ACCOUPLER AVEC DE MULTIPLES PORTS COMPACTS

(30) Priority: 02.11.2021 US 202163274678 P
(43) Date of publication of application: 03.05.2023
(73) Proprietor: Corning Research & Development Corporation, Corning, New York 14831 (US)
(72) Inventor: Isenhour, Micah Colen, Lincolnton, North Carolina, 28092 (US); Janasz, Lukasz Piotr, 91-148 Lodz (PL); Przemyska, Magdalena Czeslawa, 93-372 Lodz (PL); Piotrowski, Piotr Pawel, 95-100 Zgierz, Lodzkie (PL)
(74) Representative: Sturm, Christoph

(56) References cited:
- EP-A1- 3 036 576
- EP-A2- 1 245 980
- EP-B1- 3 036 576
- US-A1- 2012 301 090
- US-A1- 2021 096 317

## Description

### CROSS-REFERENCE TO RELATED APPLICATIONS

This application claims the benefit of priority of U.S. Provisional Application Serial No. 63/274678 filed on November 2, 2021.

### FIELD

The disclosure is directed to optical cable assemblies, and, more particularly, to attachment bodies and optical cable assemblies using the attachment bodies that mate with a compact multiport.

### BACKGROUND

Optical fiber is increasingly being used for a variety of applications, including but not limited to broadband voice, video, and data transmission. As bandwidth demands increase optical fiber is migrating deeper into communication networks such as in fiber to the premises applications such as FTTx, 5G, and the like. As optical fiber extends deeper into communication networks there exists a need for building more complex and flexible fiber optic networks in a quick and easy manner.

Multiports are devices for making an optical connection with hardened connectors such as the OptiTap^{®} multiport sold by Corning Optical Communications, LLC of Charlotte, North Carolina. Prior art multiports have a plurality of receptacles mounted through a wall of the housing for protecting an indoor connector inside the housing that makes an optical connection to the external hardened connector of the branch or drop cable.

Recently, more compact next generation multiports or terminals have been developed, such as the Evolv^{™} multiport sold by Corning. Such compact next generation multiports have a reduced size for the shells and along with these smaller shell the next generation multiport have smaller ports for cable entry. These smaller ports of next generation multiports renders some legacy optical cables, such as round optical cables having a large outer diameter, incompatible for entering the ports of these compact next generation multiports as input tethers or input cables.

Consequently, there exists an unresolved need for devices and optical cable assemblies that enable interoperability between certain legacy optical cables and compact next generation multiports or terminals having relatively small ports.

US 2012 / 301 090 A1 discloses an optical cable assembly having a furcation body molded about the fiber optic cable. US 2012 / 301 090 A1 requires placing the cable in the mold and then injecting a melted polymer to form the furcation body within the mold, which then hardens about the cable.

US 2021 / 096 317 A1 discloses other prior art.

### SUMMARY

The disclosure is directed to attachment bodies and optical cable assemblies using these attachment bodies that enable legacy optical cables, such as round optical cables with large diameters, to be coupled or enter these next generation compact multiports or terminals. The attachment bodies provide an attachment interface for legacy optical cables to be used with these next generation multiports or terminals.

The invention provides an optical cable assembly according to claim 1.

The invention provides further a multiport according to claim 9.

The invention provides further a method of assembling an optical cable assembly according to claim 10.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure and are incorporated into and constitute a part of this specification. The drawings illustrate various embodiments and together with the description serve to explain the principles and operation.

### BRIEF DESCRIPTION OF THE FIGURES

FIG. 1 illustrates a perspective view of an example compact multiport according to one or more embodiments described and illustrated herein;
FIG. 2A illustrates a perspective view of an example optical cable assembly according to one or more embodiments described and illustrated herein;
FIG. 2B illustrates a cutaway perspective view of the example optical cable assembly of FIG. 2A according to one or more embodiments described and illustrated herein;
FIG. 2C illustrates a cross-sectional view of the example optical cable assembly of FIG. 2A according to one or more embodiments described and illustrated herein;
FIG. 2D illustrates a rear end of a cable insertion portion of an example attachment body according to one or more embodiments described and illustrated herein;
FIG. 2E illustrates a front end of a port insertion portion of an example attachment body according to one or more embodiments described and illustrated herein;
FIG. 3 illustrates perspective views of an optical cable assembly inserted into a multiport according to one or more embodiments described and illustrated herein;
FIG. 4 illustrates a perspective view of an adhesive surrounding a strength member according to one or more embodiments described and illustrated herein;
FIG. 5 illustrates a digital image of a diced cable securing portion of an example optical connector according to one or more embodiments described and illustrated herein; and
FIG. 6 illustrates an example method for assembling an optical cable assembly according to one or more embodiments described and illustrated herein;

### DETAILED DESCRIPTION

References will now be made in detail to the embodiments of the disclosure, examples of which are illustrated in the accompanying drawings. Whenever possible, like reference numbers will be used to refer to like components or parts.

The concepts for the attachment bodies and optical cable assemblies using the attachment bodies disclosed herein are suitable for providing attachment to a portion of a device such as a multiport or terminal for indoor, outdoor or other environments as desired. Generally speaking, the attachment bodies and optical cable assemblies using the attachment bodies disclosed and explained in the exemplary embodiments are operable to cooperate with multiports or terminals, but the concepts disclosed may be used with any suitable device as appropriate. As used herein, the term "multiport" or "terminal" means any device comprising at least one cable entry port having a securing feature associated with the at least one cable entry port for securing the attachment body. The multiport or terminal may also comprise at least one optical connection port for receiving an external fiber optic connector and may include an active device such as a wireless device having electronics for transmitting or receiving a signal as well.

Recently, multiports or terminals (e.g., device) having a compact design are being sold and deployed in optical networks. The multiports have at least one connection port and the securing feature associated with the connection port(s). Along with the connection ports, the multiport or terminals may use a similarly sized port for cable entry for optical fibers to enter the device such as a tethered stub entering the port or a tethered cable assembly entering the port of the device with a fiber optic connector at the far end for plug and play connectivity for the input of the device.

An example multiport or terminal is described in US 2020/0057224 A1. These multiports are scalable to many connection ports on a device in a variety of arrangements or constructions. The securing features of these multiports engage directly with a portion of an external connector of an optical cable assembly without conventional structures like prior art devices that require the turning of a coupling nut, bayonet or the like. Consequently, the connection ports or cable entry ports for these devices are typically smaller than some conventional cables that are widely used and accepted by network operators.

These devices exclude conventional securing features for the external fiber optic connectors, thereby making the connection ports and cable entry ports relatively small. Conventional securing features excludes threads and features that cooperate with bayonets on a connector that make the connection ports or cable entry port sizable in conventional devices. For these reasons, these next generation devices advantageously allow connection port(s) and/or cable entry ports to be closely spaced and may result in relatively small devices since the room need for turning a threaded coupling nut or bayonet is not necessary. The compact form-factors may allow the placement of the multiports in tight spaces in indoor, outdoor, buried, aerial, industrial or other applications while providing at least one connection port that is advantageous for a robust and reliable optical connection in a removable and replaceable manner.

Since the connector footprint used with this next generation of devices does not require the bulkiness of a coupling nut or bayonet, the fiber optic connectors and/or cable entry ports used with the devices disclosed herein may be significantly smaller than conventional connectors and cable entry ports used with conventional multiports. Moreover, the connection ports on the next generation devices allow an increased density of connection ports per volume of the shell since there is no need for accessing and turning the coupling nut or bayonets by hand for securing a fiber optic connector like the prior art multiports.

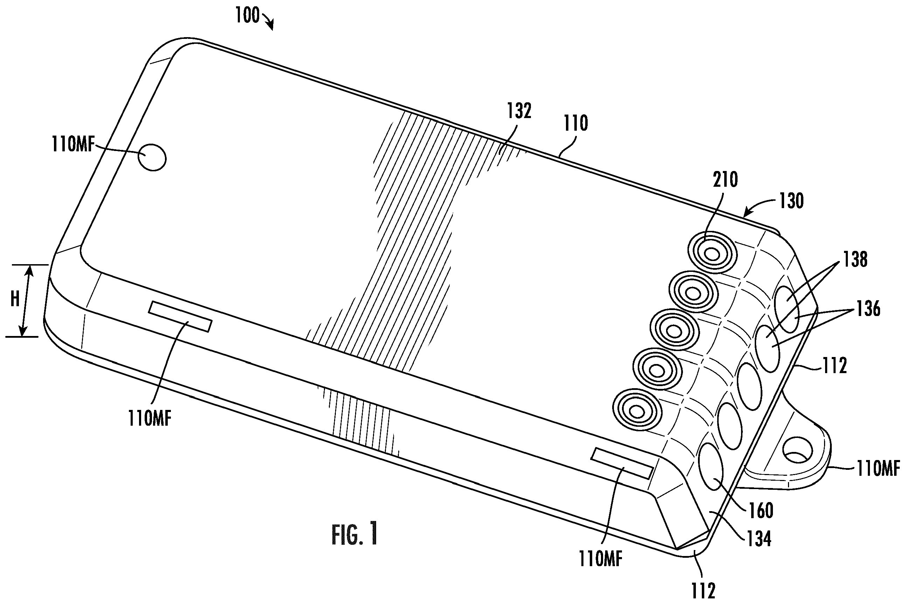

However, legacy optical connectors and optical cables may not be compatible with the connector ports of these compact multiports. For example, some legacy optical cables may be large in diameter, and therefore incapable of entering the compact cable entry ports of these next generation devices having a slim profile. By way of example, the devices can have a height of about 20 millimeters with a connection port or cable entry port of about 12 millimeters and aligned in an array on one end of the device such as depicted in **FIG. 1****.** Further, such compact and slim devices may use a relatively small flat or round optical cable for the external fiber optic connector, which may leave larger conventional optical cables incapable of cable entry into these devices.

The embodiments of the present disclosure provide for an attachment body that provides compatibility to compact next generation devices for round optical cables and/or optical cables having a diameter that is traditionally too large for such next generation devices. Embodiments therefore provide compatibility for many legacy optical cables.

Various embodiments of optical connectors, optical cable assemblies, and methods of assembling an optical cable assembly are described in detail below.

Referring now to FIG. 1, an example multiport 100 operable to receive and mate external fiber optical connectors and receive optical cable assemblies at a cable entry port with a similar size as the input connection ports that receive the external fiber optic connectors as described here is illustrated. The example multiport 100 comprises a shell 110 comprising a body 132 with one or more connection ports 136 disposed on a first end or portion 112 with each connection port 136 comprising a respective optical connector opening 138. The optical connector openings extend from an outer surface 134 of shell 110 of the multiport 100 into a cavity 116 and define a connection port passageway. One or more respective securing feature passageways extend from the outer surface 134 of the shell 110 to a portion of the respective connection port passageways. A plurality of securing features 210 are associated with the respective plurality of connection port passageways and at least a portion of the securing features are disposed within a portion of respective securing feature passageways. Moreover, the multiport 100 may have any suitable number of connection ports 136, cable entry ports 160 or the like using the concepts disclosed. As shown, the cable entry port has a size that is similar to the connection ports 136, and is not suitable for larger conventional fiber optic cables in a conventional manner.

The example multiport 100 includes integrated mounting features. By way of example, shell 110 depicts mounting features 110MF disposed near first and second ends 112,114 of shell 110. Mounting feature 110MF adjacent the first end 112 is a mounting tab and the mounting feature 110MF adjacent the second end 114 is a through hole. However, mounting features 110MF may be disposed at any suitable location on the shell 110 or connection port insert 130. For instance, multiport 100 also depicts a plurality of mounting features 110MF configured as passage-ways disposed on the lateral sides. Thus, the user may simply use a fastener such as a zip-tie threaded thru these lateral passageways for mounting the multiport 100 to a wall or pole as desired.

The example multiport 100 has the cable entry port 160 disposed in an outboard position of the connection port insert 130. However, the cable entry port 160 may be disposed in a medial portion of the multiport if desired. The cable entry port 160 may be configured in a suitable manner as appropriate for receiving a fiber optic cable or optical fibers. The connection ports 136 of the device may be configured as a single-fiber port or multi-fiber port.

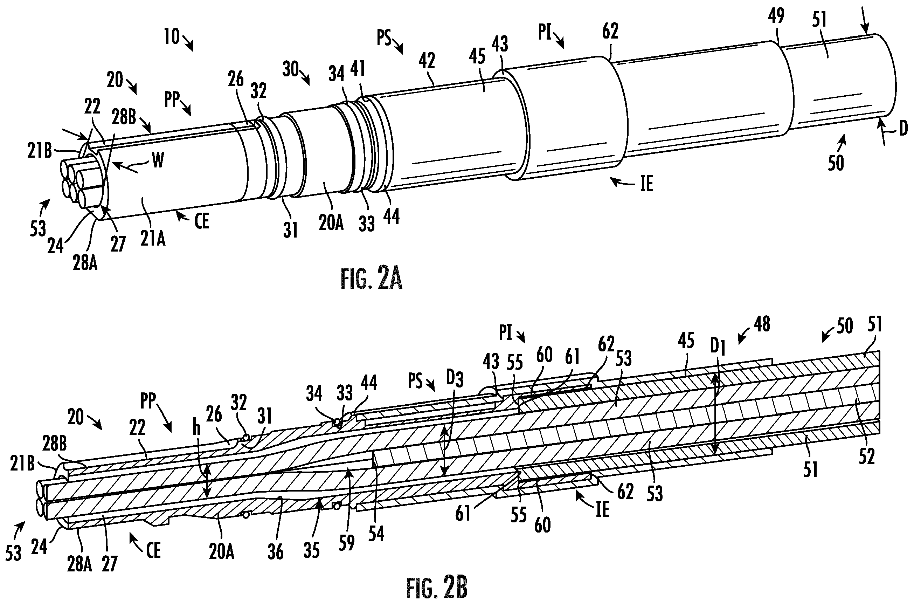

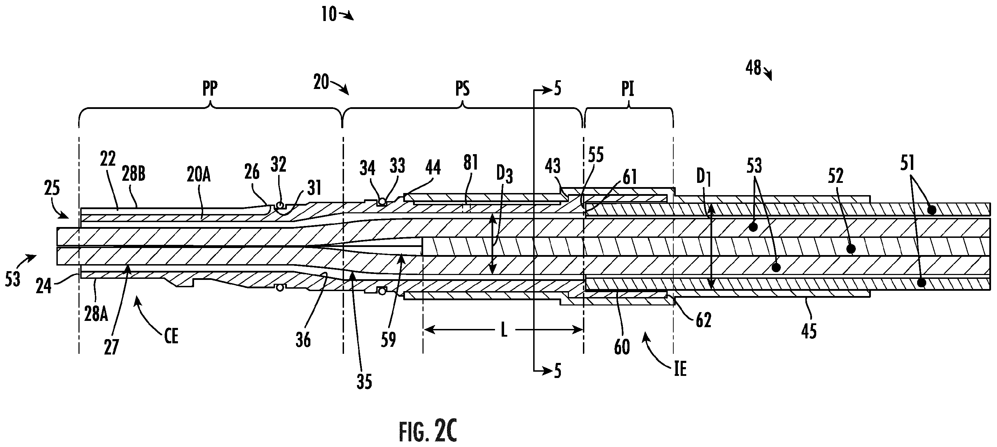

Collectively referring now to FIGS. 2A- 2B, an example optical cable assembly 10 having an example attachment body operable to cooperate with the cable entry port 160 or a connection port 136 of the multiport 100 illustrated in FIG. 1. FIG. 2A is a perspective view of the optical cable assembly 10, FIG. 2B is a cutaway perspective view of the optical cable assembly 10, and FIG. 2C is a cross-sectional view of the optical cable assembly.

The optical cable assembly 10 generally comprises an attachment body 20 and an optical cable 50. The optical cable 50 is round in shape (i.e., it is generally circular in cross section) and has a diameter D that prevents it from being coupled to a compact multiport, such as the compact multiport 100 illustrated by FIG. 1. As described in more detail below, the attachment body 20 includes features that reduce the size of the optical cable 50 so that it is compatible with the multiport 100.

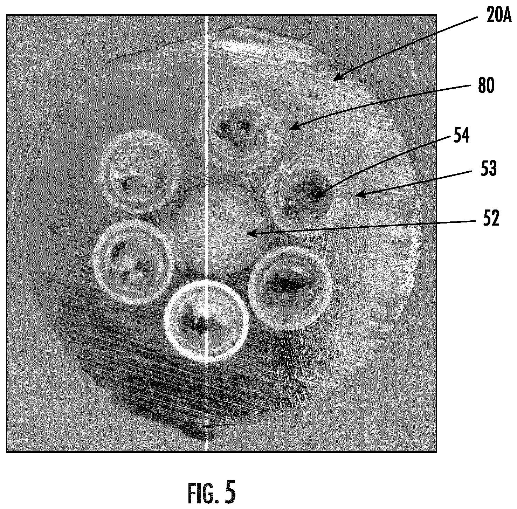

The example optical cable 50 includes an outer jacket 51 that is round in shape. The outer jacket 51 may be made of any suitable material, such as, without limitation, a polymer. The outer jacket 51 constrains one or more strength members 52 and a plurality of tubes 53 holding one or more optical fibers 54 (see FIG. 5). The one or more strength members 52 provide strength and rigidity to the optical cable 50. The strength members 52 may be provided by, without limitation, one or more of aramid fibers or yarns, fiberglass, glass-reinforced polyester, steel rods and the like.

The plurality of tubes 53 are loose within the outer jacket 51. It should be understood that in some embodiment only one tube is provided rather than a plurality of tubes, such as the case in a single-fiber embodiment. Referring briefly to FIG. 5, each tube 53 may include one or more optical fibers 54. Each optical fiber may have an inner coating (which may be a polymer) that may be stripped to reveal an optical fiber comprising a core and an outer cladding as is known in the art.

Referring once again to FIGS. 2A-2C, the optical cable 50 is inserted into the attachment body 20 that reduces a size of the optical cable 50 at a distal end CE of the attachment body 20 as compared a size of the optical cable 50 having the outer jacket 51 at a cable insertion end IE of the attachment body 20.

As shown in FIG. 2C, the attachment body 20 includes a body 20A having three portions: a cable insertion portion PI, a cable securing portion PS, and a port insertion portion PP. Each of these portions will be described in-turn with reference to FIGS. 2A-2C. It is noted that a heat shrink 45 is illustrated as disposed over the cable insertion portion PI and part of the cable securing portion PS, which obscures the outer surfaces of these portions of the body 20A.

The cable insertion portion PI is round or cylindrical in shape and has an inner diameter D₁ that is sized to accept the outer diameter D of the optical cable 50. The inner diameter D₁ may be only slightly larger than the outer diameter D of the optical cable 50 so that the optical cable 50 tightly fits within the cable insertion portion PI. In some embodiments, the inner diameter D₁ of the cable insertion portion PI is slightly smaller than the diameter D of the optical cable 50 so that the outer jacket 51 of the optical cable 50 is compressed within the cable insertion portion PI.

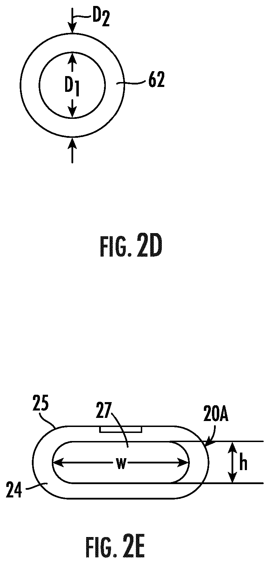

Referring briefly to FIG. 2D, the cable insertion portion PI defines a cable insertion face 62 of the attachment body 20 that has a first area that is calculated using the outer diameter D₂ of the cable insertion portion PI.

As best shown in FIGS. 2B and 2C, the inner diameter D₁ of the cable insertion portion is reduced such that the cable insertion portion PI has a jacket stop 61 configured as a ring surface. The outer jacket 51 is stripped prior to insertion into the attachment body 20, thereby defining an edge 55 of the outer jacket 51. When the optical cable 50 is inserted into the cable insertion portion PI, the edge 55 of the outer jacket 51 contacts the jacket stop 61 of the cable insertion portion PI. Thus, the jacket stop 61 acts as a hard stop for the optical cable 50, thereby preventing further insertion of the optical cable 50 into the attachment body 20.

The reduction in the inner diameter D₁ provides a transition to the cable securing portion PS, which has an inner diameter of D₃. An outer diameter of the cable securing potion PS is smaller than that of the cable insertion portion PI, which provides for a circular ledge 43. The circular ledge 43 provides an engagement feature for the heat shrink 45 that makes it more difficult to pull the heat shrink 45 off of the attachment body 20 by a longitudinal pulling force.

The outer surface of the cable securing portion PS further defines an outer ring 44, which may be used as a surface to which the heat shrink 45 abuts, as well as a feature that abuts an outer surface of a multiport upon mating, as described in more detail below.

The outer surface of the cable securing portion PS may further include a sealing groove 33 that is operable to receive a sealing member 33, such as an o-ring. The sealing member 33 may contact an inner surface of the passageway of a multiport to prevent moisture and debris from entering the multiport.

As shown in FIG. 2C, the one or more strength members 52 are cut so that the one or more strength members 52 is/are terminated within the cable securing portion PS. The one or more strength members 52 may be cut so that they extend a predetermined length L to ensure that an end of the one or more strength members 52 resides within the cable securing portion PS.

The cutting of the one or more strength members 52 creates a void 59 within the cable securing portion PS. The void 59 provides a space to receive an adhesive 80 (see FIGS. 5 and 5). The adhesive 80 may be any suitable adhesive, such as a two-part polyurethane-based adhesive. The adhesive 80 is injected into the section of the passageway defined by the cable securing portion PS. The cable securing portion PS may include an adhesive injection port 81 to inject the adhesive into the cable securing portion PS. However, other methods for injecting the cable securing portion PS with adhesive may be provided.

The adhesive 80 secures the one or more strength members 52 to the body 20A by wicking in between the individual tubes 53 and the one or more strength members 52. The adhesive 80 may fill in the void 59.

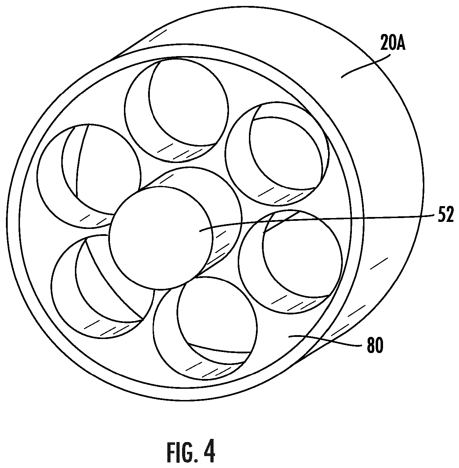

FIG. 4 provides a partial perspective view of the adhesive 80, a strength member 52 and the body 20A with the plurality of tubes 53 removed. FIG. 5 provides a front view of a cable assembly that has been diced along line 5-5 of FIG. 2C. As shown in both FIGS. 4 and 5, the adhesive 80 surrounds the central strength member 52 and the plurality of tubes 53. The adhesive 80 further bonds the central strength member 52 and the plurality of tubes to the body 20A at the cable securing portion PS, thereby providing significant strain relief for the optical cable 50 with respect to the attachment body 20.

Six sample optical cable assemblies were fabricated according to FIGS. 2A-2C. The optical cable was secured to the attachment body using a polyurethane adhesive. The strain relief capabilities of the six sample optical cable assemblies were tested by applying a tensile force. The amount of tensile force and the elongation at break were recorded when the optical cable broke free from the connector body. The results are shown in Table 1 below.

**Table 1**

| Specimen No. | Force σ_{M} (N) | Elongation at Break (ε_{B}) % |
|---|---|---|
| 1 | 1060 | 68.4 |
| 2 | 1220 | 74.6 |
| 3 | 1130 | 4.8 |
| 4 | 1330 | 35.8 |
| 5 | 1530 | 47.1 |
| 6 | 1190 | 55.2 |

Table 1 illustrates how each sample shows a high tensile force of above 1000N at the breaking point.

Referring once again to FIGS. 2A-2C, the port insertion portion PP, which is the portion of the attachment body 20 that is inserted into a cable entry port of a multiport, is adjacent to the cable securing portion PS. The height of the passageway within the attachment body 20 in the cable securing portion PS (the height is defined by inner diameter D₃ in the cable securing portion) gradually decreases from the inner diameter D₃ to a height h. The port insertion portion PP has a tapered interior wall 36 that reduces the height of the passageway. The tapered interior wall 36 forces the individual tubes 53 closer to one another so that they converge in an array defined by one or more rows.

The port insertion portion PP has a shape that is non-round. In the illustrated embodiment, the inner passageway and the exterior surface of the port insertion portion PP are both substantially discorectangular. However, it should be understood that other shapes are possible depending on the shape of the ports on the multiport. Referring specifically to FIG. 2A, the discorectangular outer surface of the port insertion portion PP includes a first semi-circle surface 21A, a second semi-circle surface 21B, a first flat surface 28A, and a second flat surface 28B. The shape of the port insertion portion PP is such that it may be inserted into a connection port of a multiport. Referring briefly to FIG. 2E, the insertion end of the port insertion portion PP defines an insertion face 24 having a second area that is smaller than the first area of the body 20A illustrated in FIG. 2C. The second area is the area that is encompassed by the outer surface 25 of the body 20A. Due to the second area being smaller than the first area, the body 20A is operable to reduce the size of the attachment body 20 at the port insertion portion PP as compared to the cable insertion portion PI. In this matter, the attachment body 20 enables an optical cable that is not compatible with small, compact next generation multiports or terminals to be used with such devices for cable entry.

The passageway 27 within the port insertion portion PP is sized and shaped to arrange the plurality of tubes 53 into an array of rows and columns. As shown in FIG. 2A, the illustrated example provides two rows and three columns of tubes 53 holding optical fibers. However, any number of rows and columns may be provided. The passageway 27 within the port insertion portion PP is substantially discorectangular in shape to force the plurality of tubes 53, which are provided in a radial arrangement in the optical cable 50 (see FIG. 5) into an array of rows and columns. Thus, the passageway 27 has a width w that is greater than a height h (see FIG. 2).

The port insertion portion PP may also include an annular groove 31 for seating a sealing member 32, such as an o-ring. Like sealing member 34, sealing member 32 may prevent moisture and debris from entering the multiport when the optical connector 20 is mated to the multiport.

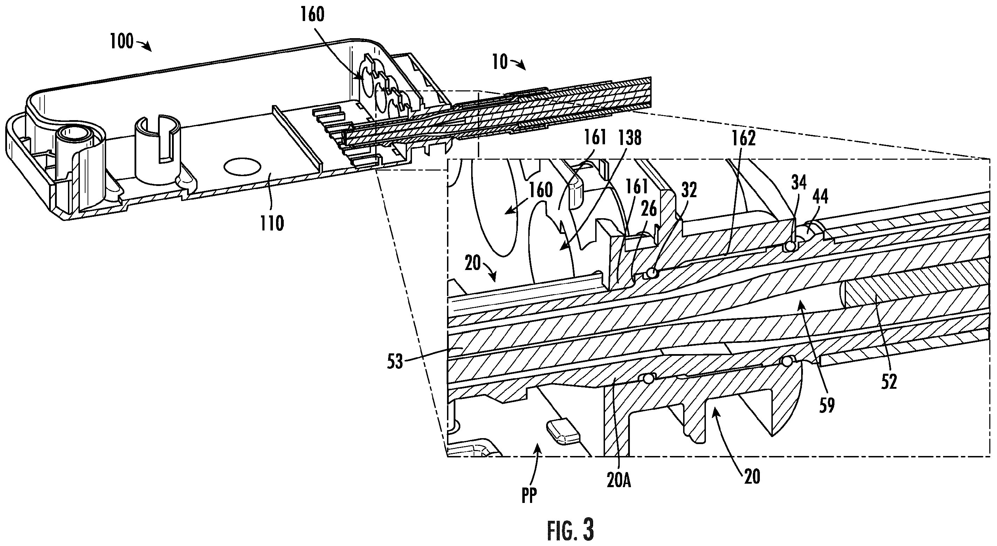

The port insertion portion PP may further include engagement features for mating with corresponding engagement features of the multiport or terminal to ensure a proper mated connection between the attachment body 20 and the device. The example body 20A includes a first engagement feature configured as a longitudinal port engagement groove 22 disposed in the second flat surface 28B. As described in more detail with reference to FIG. 3, the longitudinal port engagement groove 22 is configured to receive a flange within a port of multiport or terminal.

Referring now to FIG. 3, a cutaway perspective view of an attachment body 20 inserted into a connection port 138 of a compact multiport or terminal 100. A top cover of the shell 110 is removed to illustrate the attachment body 20 within the multiport 100. As shown in FIG. 3, the port insertion portion PP of the body 20A is inserted into a connection port 138 of the multiport (or an cable entry port 160). A flange 161 within the opening of the connection port 138 is operable to be disposed within the longitudinal port engagement groove 22 of the port insertion portion PP. Cooperation between the flange 161 and the longitudinal port engagement groove 22 provides keying so that the attachment body 20 can only be inserted into the connection port 138 or cable entry port 160 in one proper orientation. The sealing members 32, 34 are pressed against an inner wall 162 of the passageway defined by the connection port 138 to provide a sealing function that prevents moisture and debris from entering the multiport 100.

The longitudinal port engagement groove 22 terminates in a flange stop 26 that is operable to provide a hard stop surface for the flange 161 when the port insertion portion PP is fully inserted into the connection port 138 or cable entry port 160. Additionally, an outer housing stop 44 may also be provided to provide a hard stop against an outer surface 134 of the shell.

Securing features (FIG. 1) may be used to lock the attachment body 20 within a port of the multiport or terminal. Non-limiting examples of securing features are described in U.S. Pat. Publ. No. 2020/0057224.

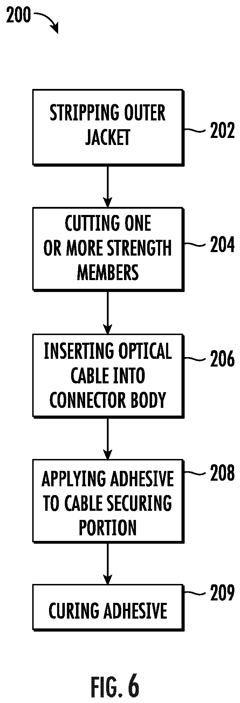

Referring now to FIG. 6, an example method 200 of assembling an optical cable assembly is illustrated. At block 202, an outer jacket 51 of a round optical cable 50 is stripped away, for example, using any known cable stripping tool or method. Stripping the outer jacket 51 exposes a plurality of tubes 53 each holding one or more optical fibers, and one or more strength members 52.

At block 204, the one or more strength members 52 are cut such that the plurality of tubes 53 is longer than the one or more strength members 52. The one or more strength members 52 are cut such that it/they extend a length L from an end of the outer jacket 53 to ensure it will terminate in a cable securing portion PS.

At block 206, the optical cable 50 is inserted into a body 20A at a cable insertion portion PI until the end 55 of the outer jacket 51 contacts the jacket stop 61. At this point, the plurality of tubes 53 should be arranged in an array at a port insertion portion PP.

At block 208, an adhesive, such as a polyurethane-based adhesive, is injected into the cable securing portion PS. The adhesive may be injected through a port 81, for example. Finally, at block 209, the adhesive is allowed to cure.

It should now be understood that embodiments of the present disclosure are directed to attachment bodies and optical cable assemblies using the attachment bodies that enable round (i.e., generally cylindrical) multi-fiber optical cables to entry and be secured to a compact next generation multiport or terminal wherein a diameter of a port opening is smaller than an outer diameter of the optical cable. The attachment bodies described herein change an arrangement of optical fibers from a radial arrangement to an array defined by rows and columns. The attachment bodies described herein expand the number of optical cable types that may be mated with compact multiports or terminals that otherwise would not be compatible.

For the purposes of describing and defining the embodiments of the present disclosure, it is noted that the terms "approximately" and "substantially" are utilized herein to represent the inherent degree of uncertainty that may be attributed to any quantitative comparison, value, measurement, or other representation. The terms "approximately" and "substantially" are also utilized herein to represent the degree by which a quantitative representation may vary from a stated reference without resulting in a change in the basic function of the subject matter at issue.

It is noted that recitations herein of a component of the embodiments being "configured" in a particular way, "configured" to embody a particular property, or function in a particular manner, are structural recitations as opposed to recitations of intended use. More specifically, the references herein to the manner in which a component is "configured" denotes an existing physical condition of the component and, as such, is to be taken as a definite recitation of the structural characteristics of the component.

It is noted that one or more of the following claims utilize the term "wherein" as a transitional phrase. For the purposes of defining the embodiments of the present disclosure, it is noted that this term is introduced in the claims as an open-ended transitional phrase that is used to introduce a recitation of a series of characteristics of the structure and should be interpreted in like manner as the more commonly used open-ended preamble term "comprising."

Although the disclosure has been illustrated and described herein with reference to explanatory embodiments and specific examples thereof, it will be readily apparent to those of ordinary skill in the art that other embodiments and examples can perform similar functions and/or achieve like results. For instance, the connection port insert may be configured as individual sleeves that are inserted into a passageway of a device, thereby allowing the selection of different configurations of connector ports for a device to tailor the device to the desired external connector. All such embodiments and examples are within the scope of the claims. It will also be apparent to those skilled in the art that various modifications and variations can be made to the concepts disclosed without departing from the scope of the same.

## Claims

1. An optical cable assembly (10) comprising:
an optical cable (50) comprising:
a round cable jacket (51);
one or more strength members (52);
a plurality of tubes (53); and
at least one optical fiber (54) in each tube (53) of the plurality of tubes (53);
a body (20A) defining a passageway therein,
**characterized in that**
the body (20A) comprises:
a cable insertion portion (PI), wherein the cable insertion portion (PI) is round and defines a cable insertion face (62) having a first area;
a cable securing portion (PS) adjacent to the cable insertion portion (PI); and a port insertion portion (PP) adjacent to the cable securing portion (PS), the port insertion portion (PP) comprising a distal end, wherein the distal end defines a port insertion face having a second area that is less than the first area;
the optical cable (50) is disposed within the body (20A) such that:
the round cable jacket (51) terminates within the cable insertion portion (PI);
the one or more strength members (52) terminates within the cable securing portion (PS), and adhesive (80) is disposed within the cable securing portion (PS); and
the plurality of tubes (53) is disposed within the port insertion portion (PP).

2. The optical cable assembly (10) of claim 1, wherein the distal end of the port insertion portion (PP) is substantially discorectangular in cross-section.

3. The optical cable assembly (10) of claim 2, wherein a proximal end of the port insertion portion (PP) that is opposed from the distal end is round in cross-section.

4. The optical cable assembly (10) of claims 2 or 3, wherein a surface of the port insertion portion (PP) comprises a port engagement groove (22).

5. The optical cable assembly (10) of claim 4, wherein the port engagement groove (22) is longitudinally disposed on the port insertion portion (PP).

6. The optical cable assembly (10) of any one of claims 1-5, wherein a transition between the cable insertion portion (PI) and the cable securing portion (PS) defines a jacket stop within the passageway such that an end of the round cable jacket abuts the jacket stop.

7. The optical cable assembly (10) of any one of claims 1-6, further comprising a heat shrink disposed around at least a portion of the cable securing portion (PS) and the cable insertion portion (PI).

8. The optical cable assembly (10) of any one of claims 1-7, further comprising an o-ring on at least one of the port insertion portion (PP) and the cable securing portion (PS).

9. A multiport (100), the multiport (100) comprising:
a plurality of connection ports (138) or cable entry ports (160),
optical cable assemblies (10) of any one of claims 1-8, wherein the port insertion portion (PP) of the body (20A) of a respective optical cable assembly (10) is inserted into a respective connection port (138) or a respective cable entry port (160) of the multiport (100).

10. A method of assembling an optical cable assembly (10), the method comprising:
inserting an optical cable (50) into a passageway within a body (20A) of an attachment body (20), wherein:
the body (20A) comprises:
a cable insertion portion (PI), wherein the cable insertion portion (PI) is round and defines a cable insertion face (62) having a first area;
a cable securing portion (PS) adjacent to the cable insertion portion (PI); and
a port insertion portion (PP) adjacent to the cable securing portion (PS), the port insertion portion (PP) comprising a distal end, wherein the distal end defines a port insertion face having a second area, and the first area is greater than the second area;
the optical cable (50) comprises:
a round cable jacket (51);
one or more strength members (52);
a plurality of tubes (53); and
at least one optical fiber (54) in each tube (53) of the plurality of tubes (53);
the optical cable (50) is inserted into the body (20A) such that:
the round cable jacket (51) terminates within the cable insertion portion (PI);
the one or more strength members (52) terminates within the cable securing portion (PS); and
the plurality of tubes (53) is disposed within the port insertion portion (PP); and
applying an adhesive (80) in the passageway defined by the cable securing portion (PS).

11. The method of claim 10, further comprising, before inserting the optical cable (50) into the body (20A):
stripping the round cable jacket (51) to expose the one or more strength members (52) and the plurality of tubes (53); and
cutting the one or more strength members (52) such that the plurality of tubes (53) is longer than the one or more strength members (52).

12. The method of claim 10 or 11, wherein the distal end of the port insertion portion (PP) is substantially discorectangular in cross-section.

13. The method of claim 12, wherein a proximal end of the port insertion portion (PP) that is opposed from the distal end is circular in cross-section.

14. The method of claims 12 or 13, wherein a surface of the port insertion portion (PP) comprises a port engagement groove (22).

15. The method of any one of claims 10-14, wherein the attachment body (20) further comprises an o-ring on at least one of the port insertion portion (PP) and the cable securing portion (PS).

## Patentansprüche

1. Optische Kabelanordnung (10), die Folgendes umfasst:
ein optisches Kabel (50), das Folgendes umfasst:
einen runden Kabelmantel (51);
ein oder mehrere Festigkeitselemente (52);
mehrere Röhren (53); und
mindestens eine Lichtleiterfaser (54) in jeder Röhre (53) der mehreren Röhren (53);
einen Körper (20A), der einen Durchgang darin definiert,
**dadurch gekennzeichnet, dass**
der Körper (20A) Folgendes umfasst:
einen Kabeleinführungsabschnitt (PI), wobei der Kabeleinführungsabschnitt (PI) rund ist und eine Kabeleinführungsfläche (62) mit einer ersten Fläche definiert;
einen Kabelbefestigungsabschnitt (PS) angrenzend an den Kabeleinführungsabschnitt (PI); und einen Anschlusseinführungsabschnitt (PP) angrenzend an den Kabelbefestigungsabschnitt (PS), wobei der Anschlusseinführungsabschnitt (PP) ein distales Ende umfasst, wobei das distale Ende eine Anschlusseinführungsfläche definiert, die eine zweite Fläche aufweist, die kleiner als die erste Fläche ist;
wobei das optische Kabel (50) innerhalb des Körpers (20A) angeordnet ist, sodass:
der runde Kabelmantel (51) innerhalb des Kabeleinführungsabschnitts (PI) endet;
das eine oder die mehreren Festigkeitselemente (52) innerhalb des Kabelbefestigungsabschnitts (PS) enden und Klebstoff (80) innerhalb des Kabelbefestigungsabschnitts (PS) angeordnet ist; und
die mehreren Röhren (53) innerhalb des Anschlusseinführungsabschnitts (PP) angeordnet sind.

2. Optische Kabelanordnung (10) nach Anspruch 1, wobei das distale Ende des Anschlusseinführungsabschnitts (PP) im Querschnitt im Wesentlichen diskorektangulär ist.

3. Optische Kabelanordnung (10) nach Anspruch 2, wobei ein proximales Ende des Anschlusseinführungsabschnitts (PP), das dem distalen Ende gegenüberliegt, im Querschnitt rund ist.

4. Optische Kabelanordnung (10) nach Anspruch 2 oder 3, wobei eine Oberfläche des Anschlusseinführungsabschnitts (PP) eine Anschlusseingriffsnut (22) umfasst.

5. Optische Kabelanordnung (10) nach Anspruch 4, wobei die Anschlusseingriffsnut (22) in Längsrichtung auf dem Anschlusseinführungsabschnitt (PP) angeordnet ist.

6. Optische Kabelanordnung (10) nach einem der Ansprüche 1-5, wobei ein Übergang zwischen dem Kabeleinführungsabschnitt (PI) und dem Kabelbefestigungsabschnitt (PS) einen Mantelanschlag innerhalb des Durchgangs definiert, sodass ein Ende des runden Kabelmantels am Mantelanschlag anliegt.

7. Optische Kabelanordnung (10) nach einem der Ansprüche 1-6, die ferner eine Wärmeschrumpfung umfasst, die um mindestens einen Abschnitt des Kabelbefestigungsabschnitts (PS) und des Kabeleinführungsabschnitts (PI) herum angeordnet ist.

8. Optische Kabelanordnung (10) nach einem der Ansprüche 1-7, die ferner einen O-Ring auf dem Anschlusseinführungsabschnitt (PP) und/oder dem Kabelbefestigungsabschnitt (PS) umfasst.

9. Multiport (100), wobei der Multiport (100) Folgendes umfasst:
mehrere Verbindungsanschlüsse (138) oder Kabeleintrittsanschlüsse (160),
optische Kabelanordnungen (10) nach einem der Ansprüche 1-8, wobei der Anschlusseinführungsabschnitt (PP) des Körpers (20A) einer jeweiligen optischen Kabelanordnung (10) in einen jeweiligen Verbindungsanschluss (138) oder einen jeweiligen Kabeleinführungsanschluss (160) des Multiports (100) eingesetzt ist.

10. Verfahren zum Montieren einer optischen Kabelanordnung (10), wobei das Verfahren Folgendes umfasst:
Einsetzen eines optischen Kabels (50) in einen Durchgang innerhalb eines Körpers (20A) eines Befestigungskörpers (20), wobei:
der Körper (20A) Folgendes umfasst:
einen Kabeleinführungsabschnitt (PI), wobei der Kabeleinführungsabschnitt (PI) rund ist und eine Kabeleinführungsfläche (62) mit einer ersten Fläche definiert;
einen Kabelbefestigungsabschnitt (PS) angrenzend an den Kabeleinführungsabschnitt (PI); und
einen Anschlusseinführungsabschnitt (PP) angrenzend an den Kabelbefestigungsabschnitt (PS), wobei der Anschlusseinführungsabschnitt (PP) ein distales Ende umfasst, wobei das distale Ende eine Anschlusseinführungsfläche mit einer zweiten Fläche definiert und die erste Fläche größer als die zweite Fläche ist;
wobei das optische Kabel (50) Folgendes umfasst:
einen runden Kabelmantel (51);
ein oder mehrere Festigkeitselemente (52);
mehrere Röhren (53); und
mindestens eine Lichtleiterfaser (54) in jeder Röhre (53) der mehreren Röhren (53);
wobei das optische Kabel (50) so in den Körper (20A) eingeführt wird, dass:
der runde Kabelmantel (51) innerhalb des Kabeleinführungsabschnitts (PI) endet;
das eine oder die mehreren Festigkeitselemente (52) innerhalb des Kabelbefestigungsabschnitts (PS) enden; und
die mehreren Röhren (53) innerhalb des Anschlusseinführungsabschnitts (PP) angeordnet sind; und
Auftragen eines Klebstoffs (80) im Durchgang, der durch den Kabelbefestigungsabschnitt (PS) definiert ist.

11. Verfahren nach Anspruch 10, das, vor dem Einführen des optischen Kabels (50) in den Körper (20A), ferner Folgendes umfasst:
Abisolieren des runden Kabelmantels (51) zum Freilegen des einen oder der mehreren Festigkeitselemente (52) und der mehreren Röhren (53); und
Abschneiden des einen oder der mehreren Festigkeitselemente (52), sodass die mehreren Röhren (53) länger als das eine oder die mehreren Festigkeitselemente (52) sind.

12. Verfahren nach Anspruch 10 oder 11, wobei das distale Ende des Anschlusseinführungsabschnitts (PP) im Wesentlichen einen diskorektangulären Querschnitt aufweist.

13. Verfahren nach Anspruch 12, wobei ein proximales Ende des Anschlusseinführungsabschnitts (PP), das dem distalen Ende gegenüberliegt, einen kreisförmigen Querschnitt aufweist.

14. Verfahren nach Anspruch 12 oder 13, wobei eine Oberfläche des Anschlusseinführungsabschnitts (PP) eine Anschlusseingriffsnut (22) umfasst.

15. Verfahren nach einem der Ansprüche 10-14, wobei der Befestigungskörper (20) ferner einen O-Ring auf dem Anschlusseinführungsabschnitt (PP) und/oder dem Kabelbefestigungsabschnitt (PS) umfasst.

## Revendications

1. Ensemble câble optique (10) comprenant :
un câble optique (50) comprenant :
une gaine de câble ronde (51) ;
un ou plusieurs éléments de renforcement (52) ;
une pluralité de tubes (53) ; et
au moins une fibre optique (54) dans chaque tube (53) de la pluralité de tubes (53) ;
un corps (20A) définissant un passage en son sein,
**caractérisé en ce que**
le corps (20A) comprend :
une partie d'insertion de câble (PI), dans lequel la partie d'insertion de câble (PI) est ronde et définit une face d'insertion de câble (62) ayant une première surface ;
une partie de fixation de câble (PS) adjacente à la partie d'insertion de câble (PI) ; et une partie d'insertion de port (PP) adjacente à la partie de fixation de câble (PS), la partie d'insertion de port (PP) comprenant une extrémité distale, l'extrémité distale définissant une face d'insertion de port ayant une seconde surface inférieure à la première surface ;
le câble optique (50) est disposé à l'intérieur du corps (20A) de sorte que :
la gaine de câble ronde (51) se termine à l'intérieur de la partie d'insertion de câble (PI) ;
le ou les éléments de renforcement (52) se terminent à l'intérieur de la partie de fixation de câble (PS), et un adhésif (80) est disposé à l'intérieur de la partie de fixation de câble (PS) ; et
la pluralité de tubes (53) est disposée à l'intérieur de la partie d'insertion de port (PP).

2. Ensemble câble optique (10) selon la revendication 1, dans lequel l'extrémité distale de la partie d'insertion de port (PP) est sensiblement discorectangulaire en section transversale.

3. Ensemble câble optique (10) selon la revendication 2, dans lequel une extrémité proximale de la partie d'insertion de port (PP) qui est opposée à l'extrémité distale est ronde en section transversale.

4. Ensemble câble optique (10) selon les revendications 2 ou 3, dans lequel une surface de la partie d'insertion de port (PP) comprend une rainure d'engagement de port (22).

5. Ensemble câble optique (10) selon la revendication 4, dans lequel la rainure d'engagement de port (22) est disposée longitudinalement sur la partie d'insertion de port (PP).

6. Ensemble câble optique (10) selon l'une quelconque des revendications 1 à 5, dans lequel une transition entre la partie d'insertion de câble (PI) et la partie de fixation de câble (PS) définit une butée de gaine à l'intérieur du passage de telle sorte qu'une extrémité de la gaine de câble ronde bute contre la butée de gaine.

7. Ensemble câble optique (10) selon l'une quelconque des revendications 1 à 6, comprenant en outre un thermorétractable disposé autour d'au moins une partie de la partie de fixation de câble (PS) et de la partie d'insertion de câble (PI).

8. Ensemble câble optique (10) selon l'une quelconque des revendications 1 à 7, comprenant en outre un joint torique sur au moins l'une de la partie d'insertion de port (PP) et de la partie de fixation de câble (PS).

9. Multiport (100), le multiport (100) comprenant :
une pluralité de ports de connexion (138) ou de ports d'entrée de câble (160),
des ensembles câbles optiques (10) selon l'une quelconque des revendications 1 à 8, dans lequel la partie d'insertion de port (PP) du corps (20A) d'un ensemble câble optique respectif (10) est insérée dans un port de connexion respectif (138) ou un port d'entrée de câble respectif (160) du multiport (100).

10. Procédé d'assemblage d'un ensemble câble optique (10), le procédé comprenant :
l'insertion d'un câble optique (50) dans un passage à l'intérieur d'un corps (20A) d'un corps de fixation (20), dans lequel :
le corps (20A) comprend :
une partie d'insertion de câble (PI), dans lequel la partie d'insertion de câble (PI) est ronde et définit une face d'insertion de câble (62) ayant une première surface ;
une partie de fixation de câble (PS) adjacente à la partie d'insertion de câble (PI) ; et
une partie d'insertion de port (PP) adjacente à la partie de fixation de câble (PS), la partie d'insertion de port (PP) comprenant une extrémité distale, l'extrémité distale définissant une face d'insertion de port ayant une seconde surface, et la première surface est supérieure à la seconde surface ;
le câble optique (50) comprend :
une gaine de câble ronde (51) ;
un ou plusieurs éléments de renforcement (52) ;
une pluralité de tubes (53) ; et
au moins une fibre optique (54) dans chaque tube (53) de la pluralité de tubes (53) ;
le câble optique (50) est inséré dans le corps (20A) de telle sorte que :
la gaine de câble ronde (51) se termine à l'intérieur de la partie d'insertion de câble (PI) ;
le ou les éléments de renforcement (52) se terminent à l'intérieur de la partie de fixation de câble (PS) ; et
la pluralité de tubes (53) est disposée à l'intérieur de la partie d'insertion de port (PP) ; et
l'application d'un adhésif (80) dans le passage défini par la partie de fixation de câble (PS).

11. Procédé selon la revendication 10, comprenant en outre, avant d'insérer le câble optique (50) dans le corps (20A) :
le dénudage de la gaine de câble ronde (51) pour exposer le ou les éléments de renforcement (52) et la pluralité de tubes (53) ; et
la découpe du ou des éléments de renforcement (52) de telle sorte que la pluralité de tubes (53) soit plus longue que le ou les éléments de renforcement (52).

12. Procédé selon la revendication 10 ou 11, dans lequel l'extrémité distale de la partie d'insertion de port (PP) est sensiblement discorectangulaire en section transversale.

13. Procédé selon la revendication 12, dans lequel une extrémité proximale de la partie d'insertion de port (PP) qui est opposée à l'extrémité distale est circulaire en section transversale.

14. Procédé selon la revendication 12 ou 13, dans lequel une surface de la partie d'insertion de port (PP) comprend une rainure d'engagement de port (22).

15. Procédé selon l'une quelconque des revendications 10 à 14, dans lequel le corps de fixation (20) comprend en outre un joint torique sur au moins l'une de la partie d'insertion de port (PP) et de la partie de fixation de câble (PS).
